# FASCICULE DE BREVET EUROPEEN

(11) **EP 3 335 974 B1**
(45) Date de publication et mention de la délivrance du brevet: **08.04.2020**
(21) Numéro de dépôt: 17208079.8
(22) Date de dépôt: 18.12.2017
(51) Int. Cl.: B62K 21/18, B62K 21/06, B62K 5/02

(54) **SYSTÈME DE DIRECTION POUR UN VÉHICULE LÉGER**
LENKSYSTEM FÜR EIN LEICHTES FAHRZEUG
STEERING SYSTEM FOR A LIGHT VEHICLE

(30) Priorité: 19.12.2016 FR 1662724
(43) Date de publication de la demande: 20.06.2018
(73) Titulaire: Cyclopolitain, 69001 Lyon (FR)
(72) Inventeur: DEVEZE, Alain, 69560 Saint Romain en Gal (FR)
(74) Mandataire: Chevalier, Renaud Philippe

(56) Documents cités:
- FR-A1- 2 929 562
- FR-A1- 2 931 446
- GB-A- 2 394 701
- JP-A- 2004 276 755
- US-A1- 2008 073 870

## Description

La présente invention concerne un système de direction pour un véhicule léger, en particulier pour un véhicule à pédales, ainsi qu'un véhicule léger équipé d'un tel système de direction.

Les véhicules légers, en particulier les véhicules entraînés par le conducteur utilisant un pédalier, doivent présenter une masse très réduite afin de limiter l'effort fourni.

Un type de véhicule connu équipé d'une roue à l'avant et de deux roues à l'arrière, comporte une place avant pour le conducteur disposant d'un pédalier, et deux places arrière permettant de transporter de manière confortable des personnes sur des petites distances. Ce type de véhicule se développe en particulier dans les zones piétonnières ou touristiques, où la circulation des véhicules à moteur est fortement réduite pour limiter le bruit et la pollution afin d'assurer un agrément élevé pour les piétons.

Ces véhicules peuvent disposer d'une carrosserie comprenant à l'avant un pare-brise qui se continue vers l'arrière par un pavillon couvrant le conducteur et les passagers, afin de les mettre à l'abri du soleil, de la pluie ou du vent pour assurer un meilleur confort.

La direction du véhicule comportant une roue unique à l'avant, utilise généralement une fourche du type motocyclette, comprenant deux tubes de fourche recevant chacun en bas un fourreau télescopique pour assurer la suspension, supportant à l'extrémité inférieure la roue avant.

Le châssis du véhicule se termine vers l'avant par un tube de direction, recevant à l'intérieur un axe de direction monté sur deux roulements disposés aux extrémités de ce tube, cet axe recevant de chaque côté un support triangulaire appelé té de fourche.

Chaque support triangulaire comporte deux perçages formant des colliers de serrage recevant chacun un tube de fourche, de manière à former une structure rigide reliant ces tubes au châssis. Un guidon est fixé sur le support triangulaire supérieur.

Pour fixer la partie avant de la carrosserie à l'avant du châssis, il est nécessaire de prévoir une structure porteuse entourant de part et d'autre la direction, en respectant les espaces nécessaires pour le braquage de cette direction, afin de venir chercher des points d'appui fixes à l'avant du châssis.

En effet l'ensemble des composants de la direction fixé sur le tube de direction à l'avant du châssis, étant en mouvement lors du braquage de cette direction, on ne peut pas attacher de structure fixe dessus. Le document JP 2004 276755 A décrit un système de direction pour un véhicule équipé d'une carrosserie et d'une roue unique à l'avant selon le préambule de la revendication 1.

Un problème qui se pose alors est que la structure porteuse représente un ensemble encombrant et peu esthétique, qui se trouve juste devant le conducteur. Cette structure peut gêner l'accessibilité aux commandes se trouvant à l'avant, et la visibilité vers l'avant. De plus elle représente une masse et un coût qui pénalisent le véhicule.

La présente invention a notamment pour but de résoudre ces problèmes.

Elle propose à cet effet un système de direction pour un véhicule équipé d'une carrosserie et d'une roue unique à l'avant, ce système comportant deux supports triangulaires d'une fourche prévus pour être fixés aux extrémités d'un tube de direction disposé à l'avant du châssis de ce véhicule, ce système étant remarquable en ce qu'il comporte un arbre fixe prévu pour être ajusté dans le tube de direction, recevant de chaque côté par l'intermédiaire d'un roulement un support triangulaire, cet arbre recevant au-dessus du support triangulaire qui est supérieur successivement une butée axiale, un bras de fixation de la carrosserie, puis un moyen de serrage axial supérieur engagé sur l'arbre fixe, qui serre l'ensemble porté par cet arbre jusqu'au support triangulaire qui est inférieur.

Un avantage de ce système de direction est que l'arbre restant fixe dans le tube de direction, il peut supporter directement le bras supérieur de fixation de la carrosserie qui est aussi fixe. Le serrage axial de l'arbre se fait alors par l'intermédiaire de la butée axiale qui permet la rotation du support triangulaire supérieur disposé en dessous du bras fixe, puis par l'intermédiaire des roulements disposés entre chaque support triangulaire et le tube de direction.

On obtient un bras de fixation installé au-dessus de toutes les parties tournantes de la direction sans être gêné par elles, qui peut être léger et compact pour supporter l'avant de la carrosserie.

En particulier le bras de fixation disposé longitudinalement forme un appui mince et esthétique, pouvant être disposé dans la continuité de la pointe avant d'un pare-brise de la carrosserie, qui de plus ne gêne pas le conducteur pour une visibilité vers l'avant du véhicule.

Le système de direction selon l'invention peut comporter de plus une ou plusieurs des caractéristiques suivantes, qui peuvent être combinées entre elles.

Avantageusement, les roulements sont des roulements à rouleaux coniques. Ce type de roulement peut supporter des efforts axiaux importants, avec une absence de jeu radial.

En particulier, les roulements peuvent être disposés de manière à présenter le cône s'ouvrant du côté du tube de direction.

Avantageusement, le support triangulaire inférieur est fixé à l'arbre fixe par une vis axiale traversant ce support.

Avantageusement, le moyen de serrage axial supérieur est un écrou vissé à l'extrémité supérieure de l'arbre fixe.

Avantageusement, la butée axiale comporte un roulement à billes. Ce type de roulement peut supporter des efforts axiaux importants, avec un faible effort de roulement.

Avantageusement, le bras de fixation comporte un manchon entourant l'arbre fixe.

Dans ce cas, le manchon comporte avantageusement un dispositif de serrage de l'arbre fixe.

L'invention a aussi pour objet un véhicule léger comportant un système de direction présentant l'une quelconque des caractéristiques précédentes, qui est équipé d'une carrosserie dont l'extrémité avant est reliée par le bras de fixation à l'arbre fixe.

En particulier, la carrosserie peut comporter un pare-brise se terminant vers l'avant sensiblement par une pointe, qui est maintenu par le bras de fixation.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue de côté d'un véhicule léger à pédales équipé d'un système de direction suivant l'invention ;
- la figure 2 est une vue en coupe axiale suivant un plan longitudinal, de la direction de ce véhicule ;
- la figure 3 est une vue éclatée des composants de la direction de ce véhicule ; et
- la figure 4 est une vue de dessus de ce véhicule sans le pare-brise, présentant la direction complètement braquée.

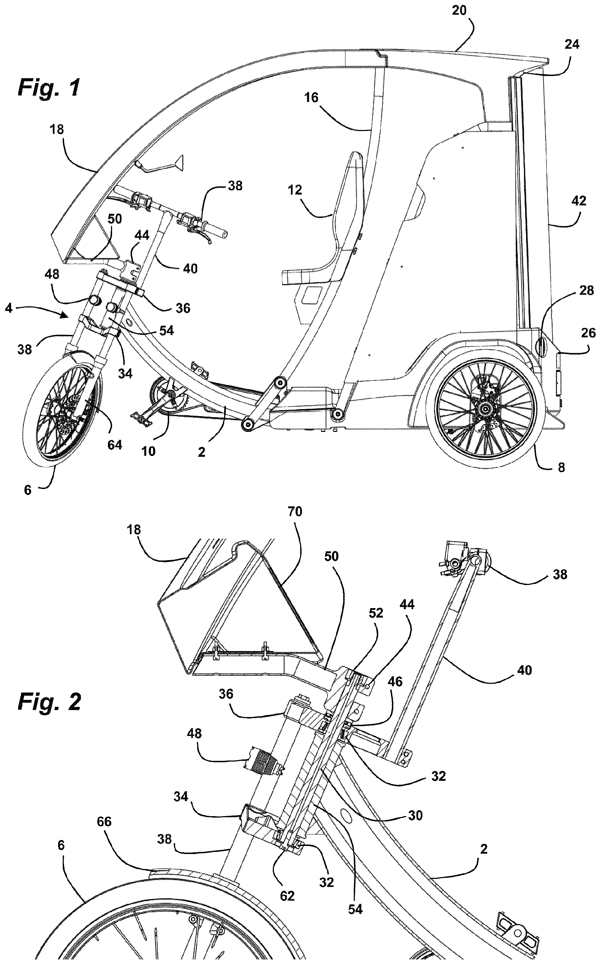

Les figures 1, 2, 3 et 4 présentent un véhicule à pédales comportant un châssis 2 recevant à l'avant une fourche 4 de guidage d'une roue avant 6, et à l'arrière un essieu supportant deux roues arrière 8. Une place centrale avant pour le conducteur comporte un siège avant 12, et un pédalier 10 entraînant par une chaîne les roues arrière 8.

L'arrière du véhicule comporte une banquette prévue pour recevoir deux personnes.

Le véhicule est équipé d'une carrosserie légère supportée par une ossature tubulaire 16, comprenant un pare-brise 18 se terminant vers l'avant par une pointe, remontant ensuite jusqu'au-dessus du conducteur. Un pavillon 20 prolongeant le pare-brise 18, réalisé par le rotomoulage d'une matière plastique, comporte une fenêtre de toit 22, et un rebord arrière 24 formant à l'arrière un bandeau transversal qui redescend sur une petite hauteur.

La carrosserie comporte en dessous des passagers un caisson arrière 26 réalisé par le rotomoulage d'une matière plastique, qui se termine par un bandeau arrière supportant des feux 28 et une plaque d'identification du véhicule.

L'avant du châssis 2 se termine par un tube de direction 54 soudé sur ce châssis recevant à l'intérieur de manière ajustée un arbre fixe 30. Le châssis 2 est réalisé en alliage d'aluminium, l'arbre fixe 30 en acier pour présenter une résistance élevée.

Chaque extrémité du tube de direction 54 reçoit un support triangulaire 34, 36 comportant un alésage ouvert du côté de ce tube, recevant la bague extérieure d'un roulement à rouleaux coniques 32, présentant des rouleaux disposés suivant un cône s'ouvrant du côté de ce tube. La bague intérieure de chaque roulement 32 est ajustée sur l'arbre fixe 30.

Une vis axiale 62 disposée en dessous de l'arbre fixe 30, traverse le support triangulaire inférieur 34 pour le serrer sur cet arbre fixe.

Une butée axiale à billes 46 est ajustée sur l'arbre fixe 30, juste au-dessus du support triangulaire supérieur 36. Un bras 50 disposé longitudinalement, comporte à l'arrière un manchon de serrage 44 entourant la partie supérieure de l'arbre fixe 30, au-dessus de la butée à billes 46.

Le manchon de serrage 44 comporte deux vis disposées tangentiellement sur deux parties de ce manchon séparées par une fente disposée dans un plan axial, qui permet de le serrer sur l'arbre fixe 30 afin d'obtenir un montage sans jeu. Un écrou supérieur 52 disposé dans un lamage supérieur du manchon 44, engagé sur un filetage de l'extrémité supérieure de l'arbre fixe 30, serre axialement ce manchon sur la butée à billes 46.

On obtient par un vissage de l'écrou supérieur 52 un serrage axial de l'empilage des éléments ajustés sur l'arbre fixe 30, avec une reprise d'effort axial à l'extrémité inférieure de cet arbre par le support triangulaire inférieur 34 maintenu par sa vis 62. On a en particulier un serrage axial de la butée à billes 46, et des deux supports triangulaires 34, 36 sur leurs roulements à rouleaux coniques 32 prévus pour supporter ces charges axiales, ce qui annule leur jeu.

Pour le serrage de l'écrou supérieur 52, les vis tangentielles du manchon de serrage 44 ne sont pas serrées afin de laisser ce manchon coulisser librement sur l'arbre fixe 30 pour trouver sa position. Ces vis tangentielles sont serrées ensuite en disposant le bras 50 dans la position angulaire souhaitée.

En réglant le vissage de l'écrou supérieur 52 suivant un couple préconisé on obtient une direction parfaitement libre et sans jeu, comprenant un mécanisme de rotation qui n'est pas plus encombrant qu'une direction traditionnelle de motocyclettes par exemple. En particulier les roulements à rouleaux coniques 32 sont entièrement intégrés dans les supports triangulaires 34, 36.

On notera que la butée à billes 46 disposée entre le support triangulaire supérieur 36 tournant pendant les manœuvres de la direction, et le manchon 44 du bras 50 qui reste fixe, permet de transmettre l'effort de serrage axial de l'écrou supérieur 52 entre ces deux éléments présentant une vitesse différentielle.

Le support triangulaire supérieur 36 comporte une extension vers l'arrière du tube de direction 54, disposée longitudinalement, recevant à son extrémité un tube formant une rehausse de guidon 40, serré dans un perçage de ce support, recevant en partie supérieure un guidon 38 présentant des poignées de commande du véhicule.

Le conducteur manœuvre le guidon 38 de manière habituelle, comme sur un vélo ou une motocyclette.

Chaque support triangulaire 34, 36 comporte de chaque côté du véhicule un perçage recevant un tube de fourche 38 serré par des vis de serrage tangentielles. Chaque tube de fourche 38 reçoit en partie inférieure un fourreau coulissant 64, supportant à sa base l'axe de la roue avant 6. Les fourreaux coulissants 64 supportent un garde-boue 66 recouvrant la roue avant 6.

L'assemblage du système de direction est le suivant. L'arbre fixe 30 est inséré dans le tube de direction 54. Le support triangulaire inférieur 34 avec son roulement à rouleaux 32 est fixé à la base de l'arbre fixe 30 par la vis de serrage axial 62.

Le support triangulaire supérieur 36 est positionné en haut de l'arbre fixe 30, puis la butée axiale 46, le bras 50, et ensuite l'écrou supérieur 52 qui est serré. On serre ensuite les vis tangentielles du manchon 44 du bras 50. Enfin les tubes de fourche 38 sont ajustés et serrés sur les supports triangulaires 34, 36.

Le bras 50 supporte une pièce de liaison 70 formant un volume présentant des côtés triangulaires, qui s'écartent vers l'avant pour venir se fixer à l'avant du pare-brise 18. La face de la pièce de liaison 70 tournée vers le conducteur, reçoit avantageusement un affichage donnant des indications sur le fonctionnement du véhicule.

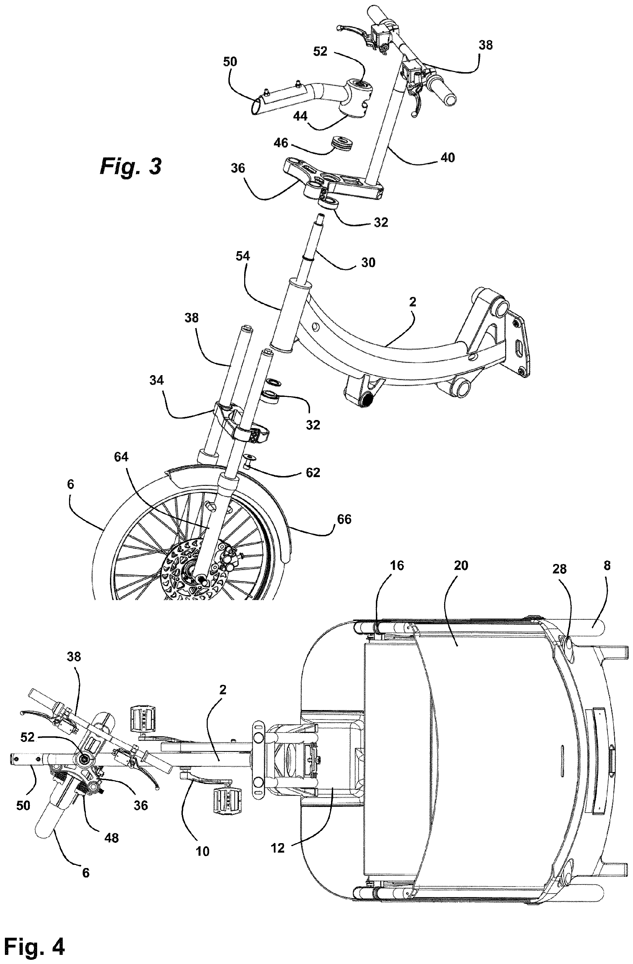

La figure 4 présente le braquage maximum de la direction du véhicule, qui n'est pas gêné par le bras 50, ou par le pare-brise qui n'est pas représenté sur cette figure.

## Revendications

1. Système de direction pour un véhicule équipé d'une carrosserie et d'une roue unique à l'avant (6), ce système comportant deux supports triangulaires (34, 36) d'une fourche prévus pour être fixés aux extrémités d'un tube de direction (54) disposé à l'avant du châssis (2) de ce véhicule, **caractérisé en ce qu'**il comporte un arbre fixe (30) prévu pour être ajusté dans le tube de direction (54), recevant de chaque côté par l'intermédiaire d'un roulement (32) un support triangulaire (34, 36), cet arbre (30) recevant au-dessus du support triangulaire qui est supérieur (36) successivement une butée axiale (46), un bras de fixation (50) de la carrosserie, puis un moyen de serrage axial supérieur (52) engagé sur l'arbre fixe (30), qui serre l'ensemble porté par cet arbre jusqu'au support triangulaire qui est inférieur (34).

2. Système de direction selon la revendication 1, **caractérisé en ce que** les roulements (32) sont des roulements à rouleaux coniques.

3. Système de direction selon la revendication 2, **caractérisé en ce que** les roulements (32) sont disposés de manière à présenter le cône s'ouvrant du côté du tube de direction (54).

4. Système direction selon l'une quelconque des revendications précédentes, **caractérisé en ce que** le support triangulaire inférieur (34) est fixé à l'arbre fixe (30) par une vis axiale (62) traversant ce support.

5. Système de direction selon l'une quelconque des revendications précédentes, **caractérisé en ce que** le moyen de serrage axial supérieur (52) est un écrou vissé à l'extrémité supérieure de l'arbre fixe (30).

6. Système de direction selon l'une quelconque des revendications précédentes, **caractérisé en ce que** la butée axiale (46) comporte un roulement à billes.

7. Système de direction selon l'une quelconque des revendications précédentes, **caractérisé en ce que** le bras de fixation (50) comporte un manchon (44) entourant l'arbre fixe (30).

8. Système de direction selon la revendication 7, **caractérisé en ce que** le manchon (44) comporte un dispositif de serrage de l'arbre fixe (30).

9. Véhicule léger équipé d'une carrosserie, et d'un système de direction selon l'une quelconque des revendications précédentes, **caractérisé en ce que** l'extrémité avant de cette carrosserie est fixée par le bras de fixation (50) à l'arbre fixe (30).

10. Véhicule léger selon la revendication 9, **caractérisé en ce que** la carrosserie comporte un pare-brise (18) se terminant vers l'avant sensiblement par une pointe, qui est reliée au bras de fixation (50).

## Patentansprüche

1. Lenksystem für ein Fahrzeug, das mit einer Karosserie und einem einzigen Rad an der Vorderseite (6) ausgestattet ist, wobei dieses System zwei dreieckige Stützen (34, 36) einer Gabel umfasst, die dafür vorgesehen sind, an den Enden eines Lenkrohrs (54) befestigt zu werden, das an der Vorderseite des Rahmens (2) dieses Fahrzeugs angeordnet ist, **dadurch gekennzeichnet, dass** es eine feste Welle (30) umfasst, die dafür vorgesehen ist, im Lenkrohr (54) angepasst zu werden, die auf jeder Seite mittels eines Lagers (32) eine dreieckige Stütze (34, 36) aufnimmt, wobei diese Welle (30) über der dreieckigen Stütze, die sich oben befindet (36), nacheinander einen Axialanschlag (46), einen Befestigungsarm (50) der Karosserie, und anschließend ein an der festen Welle (30) in Eingriff gebrachtes oberes axiales Spannmittel (52) aufnimmt, das die von dieser Welle getragene Baugruppe bis zu der dreieckigen Stütze, die sich unten befindet (34), verspannt.

2. Lenksystem nach Anspruch 1, **dadurch gekennzeichnet, dass** es sich bei den Lagern (32) um Kegelrollenlager handelt.

3. Lenksystem nach Anspruch 2, **dadurch gekennzeichnet, dass** die Lager (32) so angeordnet sind, dass sie den Kegel sich zur Seite des Lenkrohrs (54) hin öffnend aufweisen.

4. Lenksystem nach einem der vorstehenden Ansprüche, **dadurch gekennzeichnet, dass** die untere dreieckige Stütze (34) über eine axiale Schraube (62), die durch diese Stütze hindurchgeht, an der festen Welle (30) befestigt ist.

5. Lenksystem nach einem der vorstehenden Ansprüche, **dadurch gekennzeichnet, dass** es sich bei dem oberen axialen Spannmittel (52) um eine Mutter handelt, die an das obere Ende der festen Welle (30) geschraubt ist.

6. Lenksystem nach einem der vorstehenden Ansprüche, **dadurch gekennzeichnet, dass** der Axialanschlag (46) ein Kugellager umfasst.

7. Lenksystem nach einem der vorstehenden Ansprüche, **dadurch gekennzeichnet, dass** der Befestigungsarm (50) eine Hülse (44) umfasst, die die feste Welle (30) umgibt.

8. Lenksystem nach Anspruch 7, **dadurch gekennzeichnet, dass** die Hülse (44) eine Vorrichtung zum Verspannen der festen Welle (30) umfasst.

9. Leichtfahrzeug, das mit einer Karosserie und einem Lenksystem nach einem der vorstehenden Ansprüche ausgestattet ist, **dadurch gekennzeichnet, dass** das vordere Ende dieser Karosserie über den Befestigungsarm (50) an der festen Welle (30) befestigt ist.

10. Leichtfahrzeug nach Anspruch 9, **dadurch gekennzeichnet, dass** die Karosserie eine Windschutzscheibe (18) umfasst, die zur Vorderseite hin im Wesentlichen mit einer Spitze endet, die mit dem Befestigungsarm (50) verbunden ist.

## Claims

1. A steering system for a vehicle equipped with a bodywork and with one single wheel at the front (6), this system including two triangular supports (34, 36) of a fork intended to be fastened to the ends of a steering tube (54) disposed at the front of the framework (2) of this vehicle, **characterized in that** it includes a fixed shaft (30) intended to be adjusted into the steering tube (54), receiving at each side a triangular support (34, 36) via a bearing (32), this shaft (30) successively receiving above the upper triangular support (36) an axial stop (46), a fastening arm (50) of the bodywork, then an upper axial tightening means (52) fitted on the fixed shaft (30), which tightens the set carried by this shaft down to the lower triangular support (34).

2. The steering system according to claim 1, **characterized in that** the bearings (32) are tapered roller bearings.

3. The steering system according to claim 2, **characterized in that** the bearings (32) are disposed so as to have the cone opening on the side of the steering tube (54).

4. The steering system according to any one of the preceding claims, **characterized in that** the lower triangular support (34) is fastened to the fixed shaft (30) by an axial screw (62) crossing this support.

5. The steering system according to any one of the preceding claims, **characterized in that** the upper axial tightening means (52) is a nut screwed at the upper end of the fixed shaft (30).

6. The steering system according to any one of the preceding claims, **characterized in that** the axial stop (46) includes a ball bearing.

7. The steering system according to any one of the preceding claims, **characterized in that** the fastening arm (50) includes a sleeve (44) surrounding the fixed shaft (30).

8. The steering system according to claim 7, **characterized in that** the sleeve (44) includes a device for tightening the fixed shaft (30).

9. A light vehicle equipped with a bodywork, and with a steering system according to any one of the preceding claims, **characterized in that** the front end of this bodywork is fastened by the fastening arm (50) to the fixed shaft (30).

10. The light vehicle according to claim 9, **characterized in that** the bodywork includes a windshield (18) terminating at the front substantially in a tip, which is connected to the fastening arm (50).
